# EUROPEAN PATENT APPLICATION

(11) **EP 4 732 705 A1**
(43) Date of publication of application: **29.04.2026**
(21) Application number: 24209084.3
(22) Date of filing: 26.10.2024
(51) Int. Cl.: A45C 11/18, G06K 19/073

(54) **A STORAGE FRAME WITH FLAT CARD, IN PARTICULAR CARD BLOCKING NFC/RFID SIGNALS**

(71) Applicant: Zulikowska, Dorota, 80937 München (DE)
(72) Inventor: Zulikowska, Dorota, 80937 München (DE)

(57) **Abstract**

A storage frame with flat card, in particular card blocking NFC/RFID signals, characterized in that inside the frame there are two niches in the same space: the picture niche (2) and the card niche (12), and the picture niche (2) is adjacent to the transparent upper layer (1) and is surrounded by the outer wall (7) from three sides and by the rim (10) at the frame opening (6), while the card niche (12) from outside is adjacent to the bottom layer (4) and is surrounded by the outer wall (7) from three sides and by the frame opening (6) from the forth side.

## Description

The subject matter of the invention is a storage frame with flat card, in particular card blocking NFC/RFID signals, allowing storage of photos, notes, sketches, drawings, prints, etc. The external dimensions of the frame correspond to the size of a credit card allowing it to be placed in a card holder or card compartment of a wallet. The device enables personalization of a card holder by adding a photo, note, print, etc. The frame's main purpose is to be used in card holders with an opening/window that displays the top card. An integral part of the frame is a flat card, in particular card blocking NFC/RFID signals, which also holds a picture in the frame and prevents dust getting into the frame.

There are known storage frames which simply hold cards or pictures, usually in separate dividers.

Inside the frame, according to the invention, there are two niches in the same space: the picture niche and the card niche. The picture niche is adjacent to the transparent upper layer and is surrounded by the outer wall from three sides and by the rim at the frame opening, which prevents a picture from falling out through the frame opening. As to prevent the picture from falling out or getting dirty, it is covered by the card, in particular NFC/RFID blocking card, that fits into the card niche and is inserted through the frame opening. The card niche from outside is adjacent to the bottom layer and is surrounded by the outer wall from three sides and by the frame opening from the forth side. The picture niche from inside favourably is adjacent to the card niche. The bottom layer favourably has a cutout in a shape of a narrowed letter 'D' to facilitate an easy removal of the card, in particular NFC/RFID blocking card, from the card niche. The rim favourably has an edge placed away from the transparent upper layer, and in the middle section of the rim there is a notch having a shape of a narrowed letter 'D'. The card niche favourably holds the card, in particular NFC/RFID blocking card, and the card when inserted holds the picture in the picture niche. Both picture and the card, in particular NFC/RFID blocking card, are being inserted through the frame opening. The frame is enclosed at the top by a transparent upper layer, at the bottom by the bottom layer, and from three sides by the outer wall with round corners. The NFC/RFID blocking card has passive NFC/RFID blocking properties, activated by the electric field used for wireless transmission. The storage frame has the picture niche and the card niche on the long or short side.

The invention facilitates personalization of a card holder or a wallet offering at the same time an NFC/RFID protection to bank cards like credit cards or debit cards that are being held together with the picture frame in a card holder or a wallet. The picture frame protects photos from bending and scratching. With NFC/RFID blocking card being inserted and perfectly fitting the card niche, there is no dust getting into the picture frame. The card covering the photo niche blocks NFC/RFID signals, protecting bank cards stored in the cardholder or wallet. Transparent storage frame is made with scratch-resistant technology, which is crucial as wallets often use sliding mechanisms for cards, causing friction and leading to wear and tear. The product is lightweight and maximally thin to occupy minimal space in a card-holding wallet.

The solution according to the invention is shown in the picture, where the particular figures illustrate:

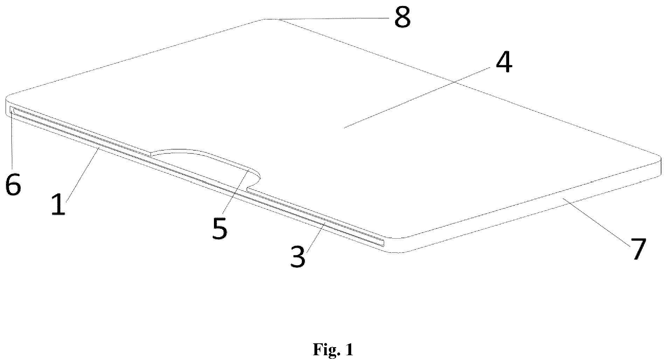

- Fig. 1: the overall view of the storage frame with the picture niche and the card niche on the long side, with the NFC/RFID blocking card inside,

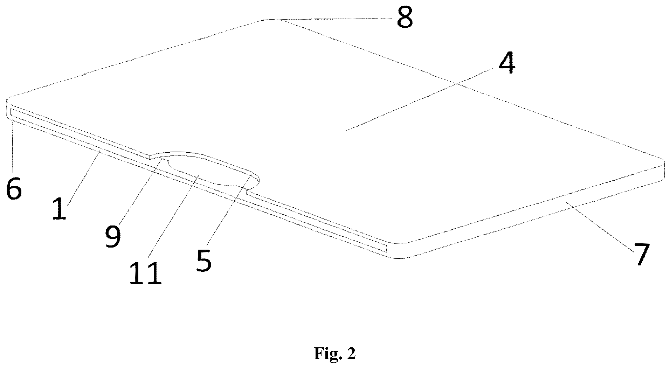

- Fig. 2: the overall view of the storage frame with the picture niche and the card niche on the long side, without the NFC/RFID blocking card inside,

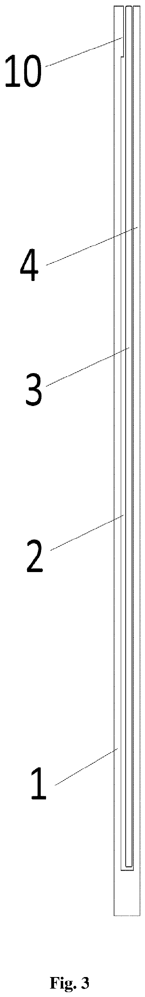

- Fig. 3: the side view of the storage frame with the picture niche and the card niche on the long side, with the NFC/RFID blocking card inside,

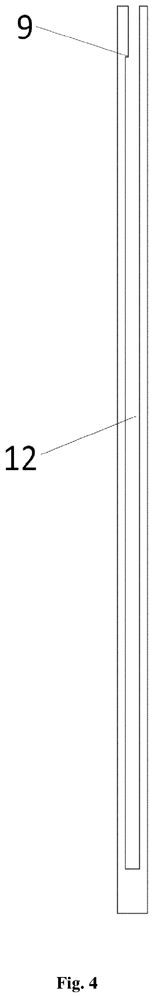

- Fig. 4: the side view of the storage frame with the picture niche and the card niche on the long side, without the NFC/RFID blocking card inside,

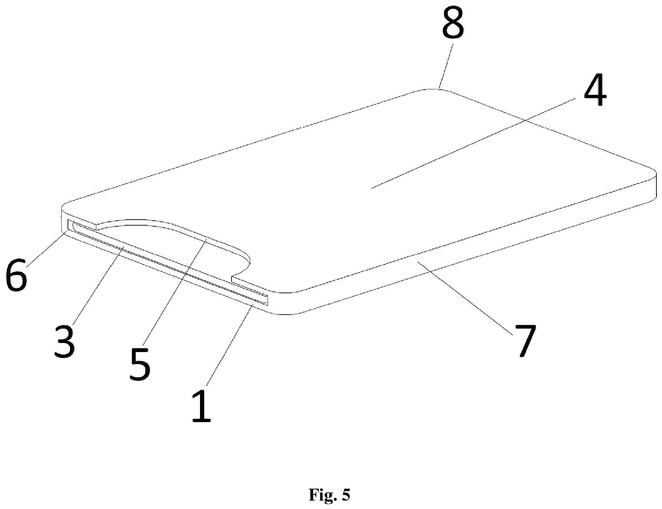

- Fig. 5: the overall view of the storage frame with the picture niche and the card niche on the short side, with the NFC/RFID blocking card inside,

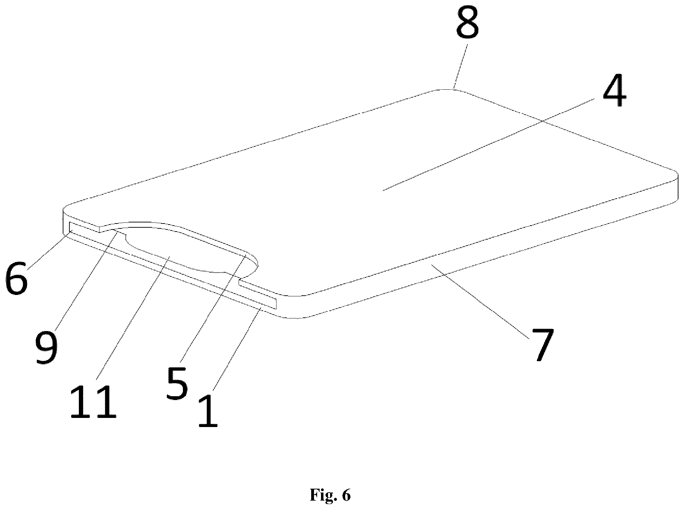

- Fig. 6: the overall view of the storage frame with the picture niche and the card niche on the short side, without the NFC/RFID blocking card inside,

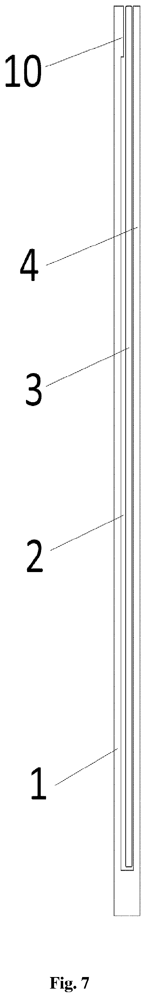

- Fig. 7: the side view of the storage frame with the picture niche and the card niche on the short side, with the NFC/RFID blocking card inside,

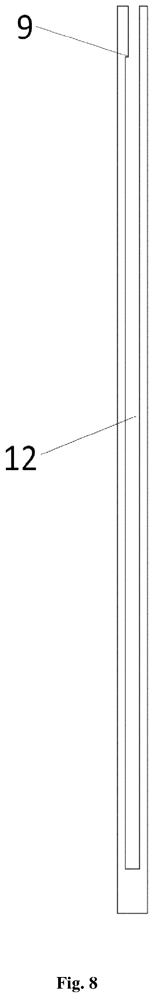

- Fig. 8: the side view of the storage frame with the picture niche and the card niche on the short side, without the NFC/RFID blocking card inside.

The storage frame has he following dimensions: 53.8 mm width x 85.4 mm length, and is made of poly carbonate with a hard coating applied to external surfaces for improved scratch resistance. The frame is enclosed at the top by a transparent upper layer (1), at the bottom by the bottom layer (4), and from three sides by the outer wall (7) with four round corners with a radius of R = 3.00 mm. Inside the frame, on the long side, there are two niches in the same space: the picture niche (2) and the card niche (12). The picture niche (2) is adjacent to the transparent upper layer (1) and is surrounded by the outer wall (7) from three sides and by the rim (10) at the frame opening (6). The rim (10) is adjacent to the frame opening (6). The edge (9) of the rim (10) is placed 0.3 mm away from the transparent upper layer (1). In the middle section of the rim (10) there is a notch (11) having a shape of a narrowed letter 'D'. The card niche (12) from outside is adjacent to the bottom layer (4) and is surrounded by the outer wall (7) from three sides and by the frame opening (6) from the fourth side. The picture niche (2) from inside is adjacent to the card niche (12). The bottom layer (4) has a cutout (5) in a shape of a narrowed letter 'D'. The card niche (12) holds the NFC/RFID blocking card (3), and the NFC/RFID blocking card (3) when inserted holds the picture in the picture niche (2).

## Claims

1. A storage frame with flat card, in particular card blocking NFC/RFID signals, having inner space for storage of cards or pictures, **characterized in that** inside the frame there are two niches in the same space: the picture niche (2) and the card niche (12), and the picture niche (2) is adjacent to the transparent upper layer (1) and is surrounded by the outer wall (7) from three sides and by the rim (10) at the frame opening (6), while the card niche (12) from outside is adjacent to the bottom layer (4) and is surrounded by the outer wall (7) from three sides and by the frame opening (6) from the forth side.

2. A storage frame according to the claim 1, **characterized in that** the picture niche (2) from inside is adjacent to the card niche (12).

3. A storage frame according to the claim 1, **characterized in that** the bottom layer (4) has a cutout (5) in a shape of a narrowed letter 'D'.

4. A storage frame according to the claim 1, **characterized in that** the rim (10) has an edge (9) placed away from the transparent upper layer (1), and in the middle section of the rim (10) there is a notch (11) having a shape of a narrowed letter 'D'.

5. A storage frame according to the claim 1, **characterized in that** the card niche (12) holds the card (3), and the card (3) when inserted holds the picture in the picture niche (2).

6. A storage frame according to the claim 1, **characterized in that** it has the picture niche (2) and the card niche (12) placed on the long side.

7. A storage frame according to the claim 1, **characterized in that** it has the picture niche (2) and the card niche (12) placed on the short side.
